# EUROPEAN PATENT SPECIFICATION

(11) **EP 3 234 898 B1**
(45) Date of publication and mention of the grant of the patent: **26.07.2023**
(21) Application number: 14908616.7
(22) Date of filing: 19.12.2014
(51) Int. Cl.: G06Q 10/067, G06Q 30/06, G06Q 10/06

(54) **MODEL-DRIVEN ARCHITECTURE FOR USER-CENTERED DESIGN**
MODELLBASIERTE ARCHITEKTUR FÜR BENUTZERZENTRIERTES DESIGN
ARCHITECTURE ENTRAÎNÉE PAR UN MODÈLE POUR UNE CONCEPTION CENTRÉE SUR L'UTILISATEUR

(43) Date of publication of application: 25.10.2017
(73) Proprietor: Ent. Services Development Corporation LP, Tysons, VA 22102 (US)
(72) Inventor: HILL, Joe, Austin, Texas 78728 (US); MARNEY, Steve, Pontiac, Michigan 48341 (US); ROHNER, Aric, Houston, Texas 77070 (US)
(74) Representative: Gill Jennings & Every LLP
(86) International application number: PCT/US2014/071402
(87) International publication number: WO 2016/099539

(56) References cited:
- US-A1- 2002 116 165
- US-A1- 2006 069 605
- US-A1- 2008 141 227
- US-A1- 2010 077 386
- US-A1- 2012 311 526
- US-A1- 2012 311 526
- US-A1- 2014 059 517
- US-B1- 6 877 155

## Description

### BACKGROUND

Businesses may increase profits by maximizing quality while at the same time minimizing cost, risk, time-to-market, and time-to-deliver. When developing solutions for customers, businesses may consider factors such as multiple tenants, client security systems, suppliers, geographies, and delivery models.

US2012311526 discloses a method that involves capturing meta-data definition of an application into an application object model definition module by capturing messaging type between node types, where the meta-data definition describes the node types. Code per node type for the node types is automatically generated in a code generation module by generating the code that enables the application to communicate peer-to-peer in accordance with captured network type and protocol preference.

US2010077386 discloses a method that involves extracting a platform independent model from a composite business/software application ran on a source platform, and transforming the model into contextually-aware implementation artifacts on a target platform, where the implementation artifacts leverage respective assets on the target platform.

US2014059517 discloses a method that involves generating descriptors for an application model via a programmed microprocessor, where the descriptors are generated from an application model object of the application model. Technology templates are identified based on technology stack information in the application model, where the technology templates are predetermined templates comprising scripting languages for automatically transforming the application model into technologies. Code related to the software application is generated based on the descriptors and the identified technology templates.

### BRIEF DESCRIPTION OF THE DRAWINGS

**Figure 1** is a high-level diagram of an example computer system which may be implemented for specifying a model-driven architecture for user-centered design.
**Figure 2** is a block diagram of an example modeling language for specifying a model-driven architecture for user-centered design.
**Figure 3** is a block diagram of an example subject-verb-object to specify a UX meta-language.
**Figure 4** is a block diagram of an example runtime platform for executing a model-driven architecture for user-centered design.
**Figure 5** is an illustration showing operation of an example tool chain for service design to execution which may be implemented for specifying a model-driven architecture for user-centered design.
**Figure 5A** shows an example system to specify a model-driven architecture for user-centered design.
**Figure 5B** shows another example system to specify a model-driven architecture for user-centered design.
**Figures 6** **and** **6A** are flowcharts illustrating example operations which may be implemented for specifying a model-driven architecture for user-centered design.

### DETAILED DESCRIPTION

Businesses constantly face the need to increase profits by maximizing quality while at the same time minimizing cost, risk, time-to-market, and time-to-deliver. Meeting these needs has become especially challenging because of the complexities that must be addressed. These complexities include multiple tenants, client security systems, suppliers, geographies, and delivery models. In addition, solutions have to function together to handle: (a) the complexities of individual solutions; (b) those that arise from interacting information sources and destinations each with their own data representations; (c) composite user interfaces; and (d) variations of system interface protocols (e.g., web services, language-specific APIs, extract/transform/load, real-time, batch). Further, challenges include the need for agility, scalability, and availability. Failure to address these challenges can result in multiple failures in development projects, client contracts, and service line offerings and portfolios.

Management of the design, build, and run of composite, role-based, service-enabled user experiences is complicated. This issue is exacerbated when considering the full range of edge device options in use today, such as web, mobile, and fat client applications. Current approaches rely heavily on manual processes which can cause multiple problems, such as failures to realize opportunities for re-use, delays in producing executable code once designs are complete, and inconsistencies of the patterns used to implement and deploy user interface code. In addition to these issues, current approaches make changing user interface solutions difficult. These problems negatively impact the technical quality and business value of user experience solutions, and result in poorer user interfaces that reduce the productivity and degrade the overall experiences of end users.

Application development has typically utilized a wide variety of development tools applied in an ad hoc manner, for example creating wireframes with whatever design tool each developer prefers. These designs then have to be manually coded, with design patterns for the code left to the developers. This approach causes a lot of unnecessary variability between developers and even between applications by the same developer, which increases the complexity of the deployment, run, and maintenance of application portfolios. This approach also fails to realize the benefits of reusing existing user interface components. Even when following good design practices, the result is an application developed within the context of a specific development environment of a particular run-time platform.

A model-driven tool chain is disclosed that connects business architecture to the design of services and to executable composite services. By standardizing design patterns and automating configuration generation, the systems and methods disclosed herein enable service providers to focus on the value-creating aspects unique to the end-user domain. More generally, systems and methods are disclosed herein for pattern-based, model-driven tool chains that eliminate the manual build phase for user-centered design. The systems and methods significantly reduce cost and implementation time, and dramatically increase quality of the product.

In an example, a method includes defining a meta-language for creating user-centered designs. The method also includes capturing a user-experience for a specified domain. The method also includes exporting a platform-independent representation of the user-centered design. The method also includes transforming the platform-independent representation into a platform-specific representation of the user-centered design that is executable on a targeted runtime platform.

In an example, a system includes a data capture tool to define a meta-language for creating user-centered designs, the data capture tool to capture user-experiences for a specified domain and export a platform-independent representation of the user experiences. The system also includes a transformation tool to transform the platform-independent representation into platform-specific representations of the user-centered design that are executable on targeted runtime platforms.

In an example, a computer program product is embodied as computer-readable instructions stored on non-transient computer-readable media and executable by a processor to define a meta-language for specifying user-centered designs, generate a platform-independent representation of the user-centered designs, and transform the platform-independent representation into platform-specific representations of the user-centered designs that are executable on targeted runtime platforms.

It can be seen that the systems and methods disclosed herein implement a design-to-execution tool chain for service integration, following a model-driven meta-pattern, which defines a platform-independent design, from which platform-specific implementations can be generated. The systems and methods are transformative to the application design and development space for user-centered designs.

The systems and methods described herein formalize the design capture, encourage reuse, automatically generate the code with standard design patterns, and simplify deployment and maintenance of a standard user interface portfolio. In addition, the end-product is platform independent and can be used to generate code which is executable on multiple operating systems and devices.

Before continuing, it is noted that as used herein, the terms "includes" and "including" mean, but are not limited to, "includes" or "including" and "includes at least" or "including at least." The term "based on" means "based on" and "based at least in part on."

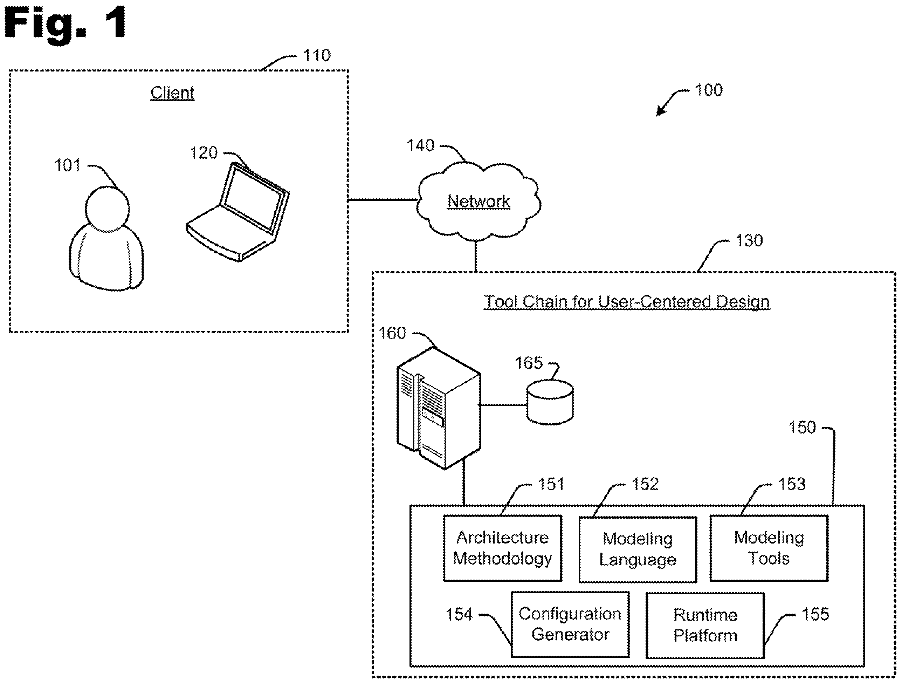

**Figure 1** is a high-level diagram of an example computer system 100 which may be implemented for specifying a model-driven architecture for user-centered design. System 100 may be implemented with any of a wide variety of computing devices, such as, but not limited to, stand-alone computers and computer servers, to name only a few examples. Each of the computing devices may include memory, storage, and a degree of data processing capability at least sufficient to manage a communications connection either directly with one another or indirectly (e.g., via a network). At least one of the computing devices is also configured with sufficient processing capability to execute the program code described herein.

In an example, the system 100 may include a client interface 110 for a user 101 at client computing device 120 to access a tool chain 130 for service design to execution. It is noted that the client interface 110 may access the tool chain 130 via a network 140, or may be directly connected. In addition, the computing devices of the client interface 110 and the tool chain 130 are not limited to any particular type of devices.

Prior approaches utilize a tiered approach, sometimes tightly aligned with the developer's proprietary data modeling methodologies. The systems and methods described herein for managing a user experience is part of a more general approach to managing service-centric composite solutions. This approach decouples layers of the architecture to separate concerns, loosely coupling user experiences, automated workflows, composite service orchestrations, conceptual service integrations, and point solution service implementations.

In an example, the system 100 includes program code 150 to implement the tool chain 130. In an example, the program code 150 may be executed by any suitable computing device (e.g., client computing device 120 and/or server computer 160).

The system 100 combines model-driven architecture and user-centered design methodologies to solve traditional problems of managing user experience solutions according to a platform-independent meta-language for specifying user-centered designs. The methodology captures user experience designs in a formal representation meta-language, then applies a fixed tool chain to generate and package the code that implements these designs into the variety of edge device solutions. Continuous delivery methods can be used to deploy these solutions, including setting up authorization delegation support and service access control, as well as the ongoing service management of the collection of user experience solutions.

The system 100 is general and covers all aspects of the management of design, build, and run of composite user experience solutions. The approach is flexible in that it can be used to build solutions for a variety of user interface frameworks running on any end user devices that implement these frameworks. For example, code can be generated to run on traditional operating systems, and/or can be incorporated in a full Services Composition Framework.

It is noted that the operations described herein may be executed by program code residing on any number and/or type of computing device. The components shown in Figure 1 are provided only for purposes of illustration of an example operating environment, and are not intended to limit implementation to any particular system. In addition, it is contemplated that the execution of program code may be performed on a separate computing system (e.g., a server bank) having more processing capability than an individual computing device.

In an example, the program code 150 may be implemented as machine-readable instructions (such as but not limited to, software or firmware). The machine-readable instructions may be stored on a non-transient computer readable medium 165, and are executable by one or more processors (e.g., of the server computer 160) to perform the operations described herein. The program code 150 may include application programming interfaces (APIs) and related support infrastructure to implement the operations described herein.

In an example, the program code 150 executes the function of a model-driven meta-pattern. The model-driven meta-pattern defines a platform-independent design, from which platform-specific implementations can be generated. In an example, the program code includes self-contained modules to implement a design-to-execution tool chain for service integration. These modules can be integrated within a self-standing tool, or may be implemented as agents that run on top of or interact with existing program code. In Figure 1, the program code 150 is shown as it may include an architecture methodology module 151, a modeling language module 152, a modeling tools module 153, a configuration generator 154, and a runtime platform 155.

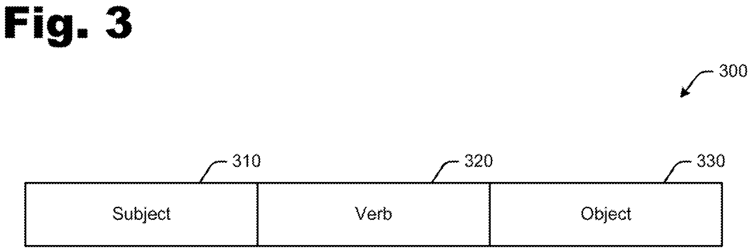

The architecture methodology module 151 may be executed with the modeling language module 152 to define a user experience (UX) meta-language. For example, the UX meta-language may be specified in a table utilizing subjects (of verbs), verbs, and objects (of verbs) to represent relationships between the elements in a user experience, as shown in Figure 3.

The modeling tools module 153 may include a data capture tool. In an example, the data capture tool may be implemented in a spreadsheet with a meta-language and data entry template. The data capture tool receives user input defining objects and roles of those objects.

The configuration generator 154 may be executed to define the user experience (UX) behavior using the UX meta-language and data received by the data capture tool. The configuration generator 154 takes as input the data from the data capture tool, and based on the UX meta-language, outputs a platform-independent representation (e.g., a diagram and/or XML document) of the objects and roles of those objects.

In an example, the configuration generator 154 may implement a transformation tool. The transformation tool receives the platform-independent representation as input, and transforms the platform-independent representation into an executable for a targeted runtime platform (e.g., compiled application code, or a configuration file). The runtime platform 155 may deploy the executable in a target environment.

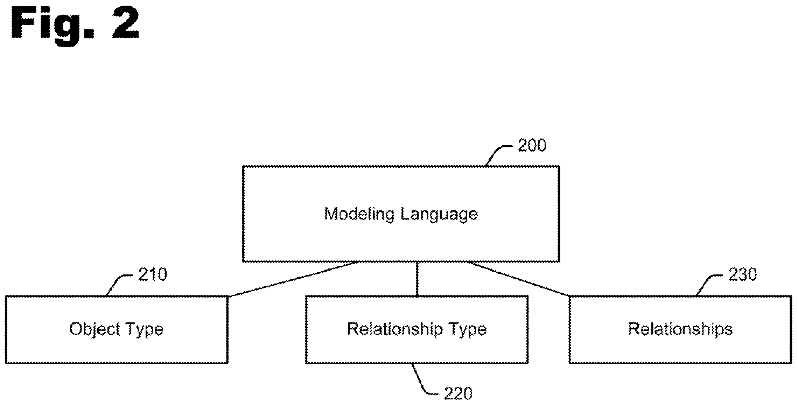

The program code described generally above can be better understood with reference to Figures 2-6A and the following discussion of various example functions. It is noted, however, that the operations described herein are not limited to any specific implementation with any particular type of program code.

**Figure 2** is a block diagram of an example modeling language 200 for specifying a model-driven architecture for user-centered design. In an example, the modeling language may be implemented as a Role-Based Domain Architecture (RDA) methodology. The RDA methodology is a formal and disciplined architecture methodology for modeling service-oriented architectures, separating the design space into layered viewpoints that are relevant to various domains of concerns. The RDA methodology provides the ability to assemble composite, user-centered, designs from a wide array of available services.

The RDA methodology may incorporate new modeling "languages," incorporate and synthesize standard modeling "languages" (e.g., BPEL, BPMN, XSD, XSL, and WSDL), and introduce new modeling languages, e.g., authorization-Based Access Control (ZBAC), User Centered Design (UCD), and the Conceptual Services Implementation Platform (CSIP). In an example, the RDA methodology includes domains (e.g., the implementation requirements) and associated layers for modeling the domains (e.g., service implementation).

The RDA methodology can be implemented as a meta-model modeling language 200 that defines specific object types 210, relationship types 220, and the relationships 230 between layers.

**Figure 3** is a block diagram of an example subject 310, verb 320, and object 330, to specify a UX meta-language. Example subjects 310 may include a User Role (which may include an Employee and a Manager in a human resources example). Example objects 330 may include an Action (which may include a Submit Promotion Request in an HR example). Example verbs 320 may include Performs, which defines a relationship between a User Role subject 310 and an Action object 330. This standardization of the user centered design meta-language makes it possible to perform automated traceability and consistency checking, and is a first step in establishing executable user-centered designs.

In an example, the methodology may include a workflow. A "workflow" is a set of tasks (manual and/or automated), and the logic and/or sequencing between the tasks. By way of example, a workflow implemented by a human resources (HR) department to promote employees may include the manager submitting a promotion request, and the manager's manager reviewing and approving the promotion request.

The methodology may also include orchestration of a collection of references to individual services and the logic by which they are collected. In the HR example, this may include creating a new case of employee promotion workflow, including the details of the employee in question, and then executing the employee promotion (after approval).

The methodology may also include implementing the user experience. The user experience may include a set of user screens and activities that link the screens for carrying out a manual task in a workflow. In the HR example, the employee's manager may utilize a manager self-service screen (e.g., to select "promote employee"), a manager select employee screen, and a confirm employee selection screen (e.g., for entering a new job code and reason for promotion).

The methodology may gather input for each manual task in a workflow to define the user experience for that task. This information may then be implemented to generate an executable user experience design.

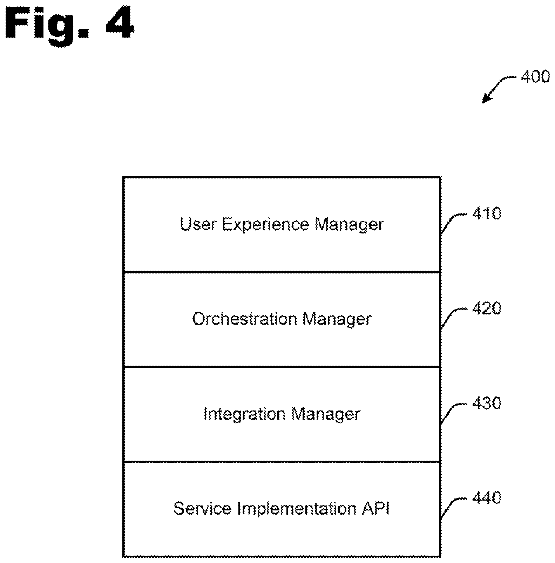

**Figure 4** is a block diagram of an example runtime platform 400 for executing a model-driven architecture for user-centered design. The runtime platform 400 may include modules 410-440.

The target runtime platform 400 is a general purpose system configured to deploy the executable generated to implement the user experience design. In an example, the target runtime platform 400 is a domain-independent, configuration-driven environment designed to execute the composite service designs produced above.

By way of illustration, the runtime platform 400 may be a Service Composition Framework (SCF) Runtime Platform. The runtime platform 400 may include APIs such as a User Experience Manager 410, an Orchestration Manager 420, an Integration Manager 430, and a Service Implementation API 440. In an example, an Integration Manager 430 may also be provided for use on a standard operating platform. During operation, the runtime platform 400 accepts the executable implementation of the user experience design to be executed by the User Experience Manager 410.

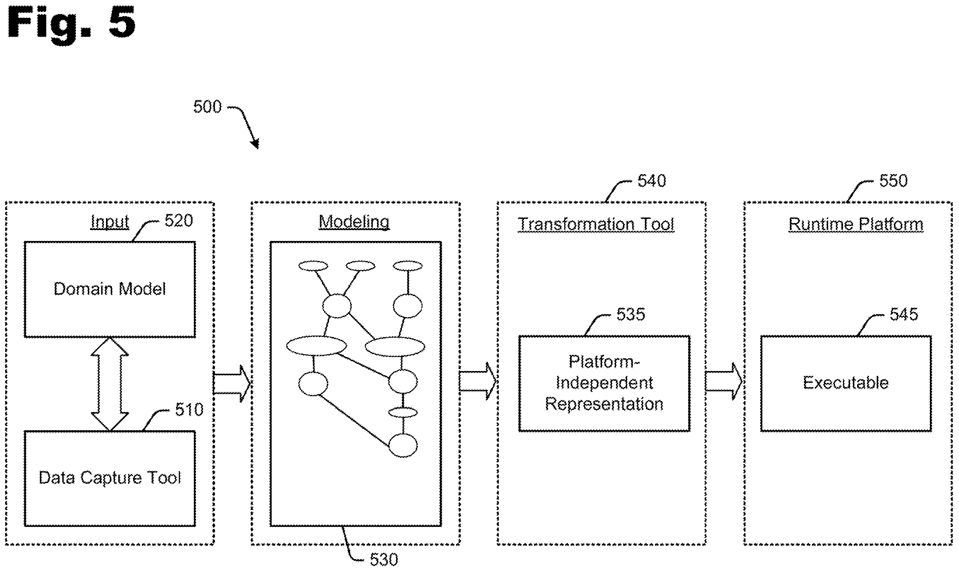

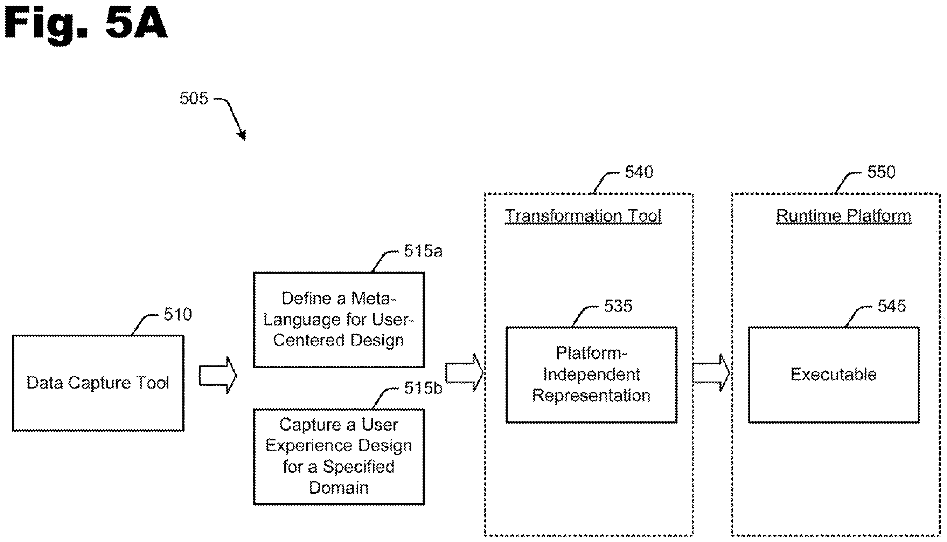

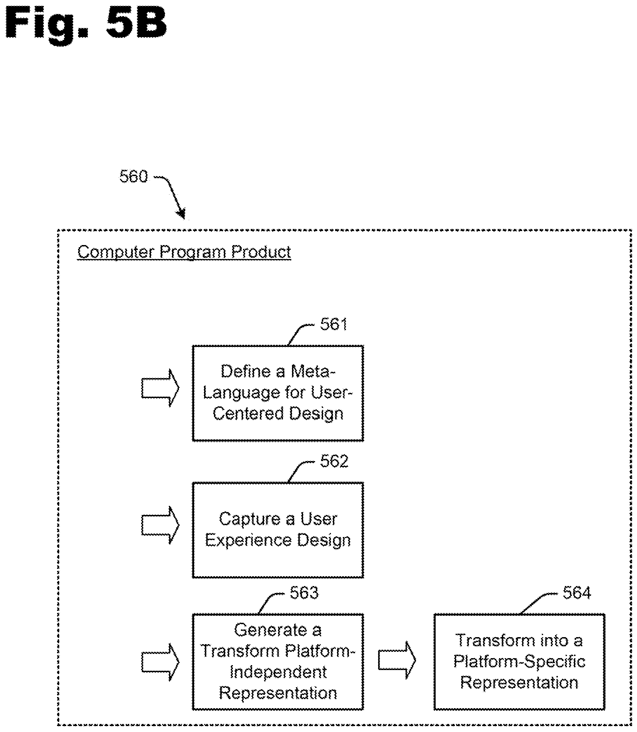

**Figure 5** is an illustration showing operation of an example tool chain 500 for service design to execution which may be implemented for specifying a model-driven architecture for user-centered design. For purposes of illustration, the tool chain described with reference to Figure 5 provides extract-transform-load capability from the domain model (e.g., RDA-based) to a Runtime Platform (e.g., SCF).

In an example, the tool chain 500 may be implemented as a system having computer-readable instructions stored on non-transient computer-readable media and executable by a processor to specify a model-driven architecture for user-centered design. In an example, the architectural type may be selected from Business Contextual Architecture (BCA), Conceptual Service Architecture (CSA), Logical Design Architecture (LDA), Physical Technology Architecture (PTA), Workflow Architecture, User Experience Architecture, and Orchestration Architecture,

In an example, the tool chain 500 may include a data capture tool 510 to define a domain model 520 of the user centered design architectural type. The data capture tool 510 defines a user experience (UX) meta-language and also identifies object types and relationship types for the user centered design architectural type.

By way of illustration, QuickRDA is a lightweight, spreadsheet-based tool for capturing domain models. It includes data capture spreadsheets, diagram generation using GraphViz, and an API allowing model data to be exported for downstream uses such as reporting or configuration and code generation.

The data capture tool 510 may collect data in any suitable form, such as a generated diagram 530. Data from the generated diagram 530 may be exported to a platform-independent representation 535 of the domain model. The platform-independent representation 535 of the domain model may be an XML representation.

The platform independent-representation 535 is input to a transformation tool 540 to undergo a transformation.

In an example, the transformation tool 540 may be implemented as a QuickRDA plugin to extract model data into XML format. The transformation tool transforms the XML file into configuration files, XSD, and XSL for the Integration Manager (430 in Figure 4), and for the workflow in the Orchestration Manager (420 in Figure 4).

The transformation tool 540 transforms the platform-independent representation 535 of the domain model 520 into an executable 545 (e.g., compiled code or configuration file) for a targeted runtime platform 550. In an example, the executable 545 may be a custom code implementation for a SCF runtime platform 550. The runtime platform 550 can process the executable 545 to enable the domain model 520.

This approach eliminates the manual build phase for any user-centered design to which the methodology is applied, significantly reducing cost and implementation time, and dramatically increasing quality. These benefits come from treating solution designs as configuration data for application programs. The methodology can be applied to application modernization, as well as application development and maintenance, and fundamentally changes the way application products are developed.

In an example, a given user interface referred to herein as a user-centered design, assumes a single Cascading Style Sheet (CSS) template and a small number (5 to 10) of screen templates, each with a defined screen layout and navigation patterns. To illustrate, consider a simplified version of a user experience meta-language. The meta-language has the following classes: User Role, Key User Task, Screen, Screen Template, Screen Component, Action, and Operation. A Screen can be a screen in a mobile application or a page in a web application.

The following example is provided for purposes of illustration, In this example, a meta-language defines the following relationships:

**Table 1**

| **Subject** | **Verb** | **Object** |
|---|---|---|
| User Role | Performs | Key User Task |
| Key User Task | Has Screen | Screen |
| Screen | Uses Screen Template | ` Screen Template |
| Screen | Has Screen Component | Screen Component |
| Screen Component | Has Action | Action |
| Action | Goes To | Target Screen |
| Action | Calls | Operation |

In an example, spreadsheet-based user-centered design capture tool may be implemented to define the user experience for an employee manager. The capture tool may be implemented as a Java^{®} plug-in that enables a meta-language template using hidden rows and a configuration file. Data entered in a row of the table determines the specific instances of the relationships in Table 1.

In an example, the Employee Manager performs the following Key User Tasks: Login, Manage Employees, Request Employee Promotion, Receive Notification of Denied Promotion, Rework Promotion Request, and Notify Employee of Promotion, Each of these Key User Tasks has one or more user screens. For example, the Request Employee Promotion may have the following screens: Select Employee Screen, Select New Job Code Screen, Review & Submit Promotion Request Screen, and Promotion Request Confirmation Submit Screen. Each of these Screens may have several actions which call various HTTP GET and POST Operations, and then go to the specified Target Screens. From this formal design specification the tool chain described herein can generate an Employee Manager's User Interface.

**Figure 5A** shows an example system 505 to specify a model-driven architecture for user-centered design. In an example, the system 505 has computer-readable instructions stored on non-transient computer-readable media and executable by a processor. The system 505 includes a data capture tool 510 to define 515a a meta-language for user-centered design. The data capture tool may also capture 515b a user experience design for a specified domain and export a platform-independent representation 535 of the user experience design. A transformation tool 540 may transform the platform-independent representation 535 into a platform-specific representation 545 of the user experience design that is executable on a targeted runtime platform 550.

**Figure 5B** shows an example computer program product 560 to specify a model-driven architecture for user-centered design. In an example, computer program product 560 may be embodied as computer-readable instructions stored on non-transient computer-readable media and executable by a processor. When executed by a processor, the computer-readable instructions define 561 a meta-language for user-centered design. The computer-readable instructions also capture 562 a user experience design. The computer-readable instructions also generate 563 a platform-independent representation of the user experience design. The computer-readable instructions also transform 564 the platform-independent representation of the user experience design into a platform-specific representation of the user experience design that is executable on a targeted runtime platform.

Before continuing, it should be noted that the examples described above are provided for purposes of illustration, and are not intended to be limiting. Other devices and/or device configurations may be utilized to carry out the operations described herein.

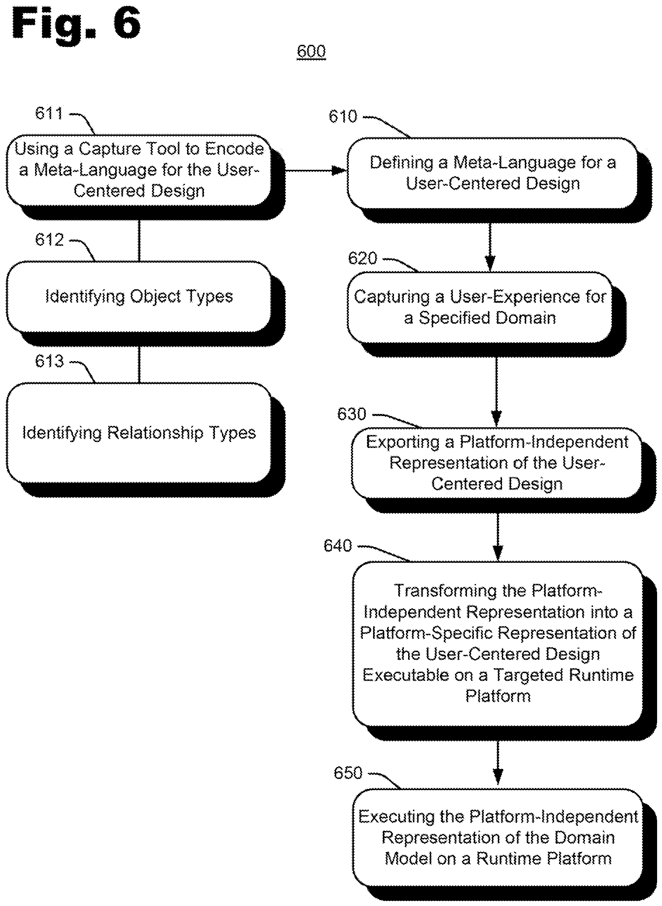

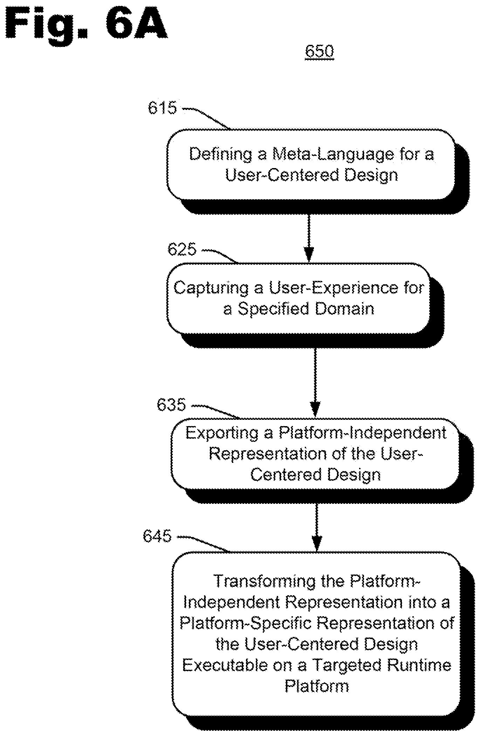

**Figures 6** **and** **6A** are flowcharts illustrating example operations which may be implemented for specifying a model-driven architecture for user-centered design. Operations 600 and 650 may be embodied as logic instructions on one or more computer-readable media. When executed on a processor, the logic instructions cause a general purpose computing device to be programmed as a special-purpose machine that implements the described operations. In an example, the components and connections depicted in the figures may be used.

In the example shown in Figure 6, operation 610 includes defining a meta-language for user-centered design. Operation 620 includes capturing a user-experience for a specified domain. Operation 630 includes exporting a platform-independent representation of the user-centered design. Operation 640 includes transforming (e.g., by applying a tool chain) the platform-independent representation into a platform-specific representation of the user-centered design that is executable on a targeted runtime platform. Operation 650 includes executing the platform-independent representation of the domain model on a runtime platform.

The operations shown and described herein are provided to illustrate example implementations. It is noted that the operations are not limited to the ordering shown. Still other operations may also be implemented.

Further example operations may include operation 611 using a capture tool that encodes the meta-language for user-centered design. Further operations may also include operation 612 identifying object types of the meta-language for user-centered design. The object types may include at least a user role. Operations may also include operation 613 identifying relationship types of the meta-language for user-centered design. The relationship types include at least a Key User Task performed by a User Role.

In the example shown in Figure 6A, operation 615 includes defining a meta-language for user-centered design. Operation 625 includes capturing a user-experience for a specified domain. Operation 635 includes exporting a platform-independent representation of the user experience. Operation 645 includes transforming the platform-independent representation into a platform-specific representation of the user experience that is executable on a targeted runtime platform.

The operations may be implemented at least in part using an end-user interface (e.g., web-based interface). In an example, the end-user is able to make predetermined selections, and the operations described above are implemented on a back-end device to present results to a user. The user can then make further selections. It is also noted that various of the operations described herein may be automated or partially automated.

## Claims

1. A computer-implemented method (600; 650) for specifying a model-driven architecture for user centered design, the method (600; 650) comprising:
defining a user experience meta-language for creating a user experience design (610; 615) based on: subjects, verbs, and objects to represent relationships between elements in the user experience design;
identifying object types and relationship types of the user experience meta- language (612; 613), wherein the object types include at least a user role, and wherein the relationship types include at least a task performed by the user role;
capturing the user experience design for a specified domain (620; 625) based on the user experience meta-language, wherein capturing the user experience design includes receiving user input defining objects and object types in a single cascading style sheet, CSS, template and a plurality of screen templates, each screen template with a defined screen layout and navigation patterns;
exporting a platform-independent representation of the user experience design (630; 635), wherein the platform-independent representation is provided based on at least the captured user experience design, and wherein the platform-independent representation is at least one of a diagram and an extensible markup language, XML, representation of the objects and the object types; and
transforming the platform-independent representation into a platform-specific representation of the user experience design that is executable on a targeted runtime platform (640; 645).

2. The method (600; 650) of claim 1, wherein transforming is implemented by applying a tool chain.

3. The method (600; 650) of claim 1, further comprising using a capture tool that encodes the meta-language for user-centered design (611).

4. The method (600; 650) of claim 1, further comprising executing the platform-specific representation of the user experience design on a runtime platform (650).

5. A system (100) having computer-readable instructions stored on non-transitory computer-readable media (165) and executable by a processor (160) to specify a model-driven architecture for user-centered design, comprising:
a data capture tool (510) to define a user experience meta-language for creating a user experience design based on subjects, verbs, and objects to represent relationships between elements in the user experience design,
the data capture tool (510) to identify object types and relationship types of the user experience meta-language, wherein the object types include at least a user role, and wherein the relationship types include at least a task performed by the user role,
the data capture tool (510) to capture the user experience design for a specified domain based on the user experience meta-language, wherein to capture the user experience design, the data capture tool (510) is to receive user input defining objects and object types in a single Cascading Style Sheet, CSS, template and a plurality of screen templates, each screen template with a defined screen layout and navigation patterns, and
the data capture tool (510) to export a platform-independent representation (535) of the user experience design, wherein the platform-independent representation (535) is provided based on at least the captured user experience design, and wherein the platform-independent representation (535) is at least one of a diagram and an extensible markup language, XML, representation of the objects and the object types; and
a transformation tool (540) to transform the platform-independent representation (535) into a platform-specific representation (545) of the user experience design that is executable on a targeted runtime platform (550).

6. The system (100) of claim 5, wherein the system (100) is implemented by a tool chain (130; 500) for specifying models of an architectural type applied to user-centered design.

7. The system (100) of claim 5, further comprising a custom code implementation of a service composition framework runtime platform to execute the platform-specific representation (545) of the user experience design.

8. The system (100) of claim 5, further comprising five to ten screen templates.

9. A computer program product embodied as a program code (150) stored on non-transient computer-readable media (165) and executable by a processor (160), the program code (150) comprising:
an architecture methodology module (151) and a modeling language module (152) for defining a user experience meta-language for creating a user-experience design based on subjects, verbs, and objects to represent relationships between elements in the user experience design;
a modeling tools module (153) for identifying object types and relationship types of the user experience meta- language, wherein the object types include at least a user role, and wherein the relationship types include at least a task performed by the user role;
the modeling tools module (153) for capturing the user experience design for a specified domain based on the user experience meta-language, wherein capturing the user experience design includes receiving user input defining objects and object types in a single Cascading Style Sheet, CSS, template and a plurality of screen templates, each screen template with a defined screen layout and navigation patterns;
a configuration generator (154) for generating a platform-independent representation of the user experience design, wherein the platform-independent representation is generated based on at least the captured user experience design, and wherein the platform-independent representation is at least one of a diagram and an extensible markup language, XML, representation of the objects and the object types; and
the configuration generator (154) for transforming the platform-independent representation of the user experience design into a platform-specific representation of the user experience design that is executable on a targeted runtime platform(155).

## Patentansprüche

1. Computer-implementiertes Verfahren (600; 650) zum Spezifizieren einer modellgesteuerten Architektur für benutzerorientierte Gestaltung, wobei das Verfahren (600; 650) Folgendes umfasst:
Definieren einer Benutzererfahrungs-Metasprache zum Erstellen einer Benutzererfahrungsgestaltung (610; 615) basierend auf Subjekten, Verben und Objekten, um Beziehungen zwischen Elementen in der Benutzererfahrungsgestaltung darzustellen;
Identifizieren von Objekttypen und Beziehungstypen der Benutzererfahrungs-Metasprache (612; 613), wobei die Objekttypen mindestens eine Benutzerrolle enthalten und wobei die Beziehungstypen mindestens eine von der Benutzerrolle ausgeführte Aufgabe enthalten;
Erfassen der Benutzererfahrungsgestaltung für eine spezifizierte Domäne (620; 625) basierend auf der Benutzererfahrungs-Metasprache, wobei das Erfassen der Benutzererfahrungsgestaltung das Empfangen von Benutzereingaben umfasst, die Objekte und Objekttypen in einer einzelnen Cascading-Style-Sheet-, CSS-, Vorlage und einer Vielzahl von Bildschirmvorlagen definieren, wobei jede Bildschirmvorlage ein definiertes Bildschirmlayout und Navigationsmuster aufweist;
Exportieren einer plattformunabhängigen Darstellung der Benutzererfahrungsgestaltung (630; 635), wobei die plattformunabhängige Darstellung zumindest basierend auf der erfassten Benutzererfahrungsgestaltung bereitgestellt wird, und wobei die plattformunabhängige Darstellung mindestens eines von einem Diagramm und einer Darstellung der Objekte und der Objekttypen in der erweiterbaren Auszeichnungssprache (extensible Markup Language, XML) ist; und
Transformieren der plattformunabhängigen Darstellung in eine plattformspezifische Darstellung der Benutzererfahrungsgestaltung, die auf einer Ziel-Laufzeitplattform ausführbar ist (640; 645).

2. Verfahren (600; 650) nach Anspruch 1, wobei die Umwandlung durch Anwendung einer Werkzeugkette implementiert wird.

3. Verfahren (600; 650) nach Anspruch 1, das ferner die Verwendung eines Erfassungswerkzeugs umfasst, das die Metasprache für benutzerorientierte Gestaltung (611) codiert.

4. Verfahren (600; 650) nach Anspruch 1, das ferner das Ausführen der plattformspezifischen Darstellung der Benutzererfahrungsgestaltung auf einer Laufzeitplattform (650) umfasst.

5. System (100) mit computerlesbaren Anweisungen, die auf nicht-flüchtigen computerlesbaren Medien (165) gespeichert sind und von einem Prozessor (160) ausgeführt werden können, um eine modellgesteuerte Architektur für benutzerorientiertes Gestaltung zu spezifizieren, umfassend:
ein Datenerfassungswerkzeug (510) zum Definieren einer Benutzererfahrungs-Metasprache zum Erstellen einer Benutzererfahrungsgestaltung basierend auf Subjekten, Verben und Objekten, um Beziehungen zwischen Elementen in der Benutzererfahrungsgestaltung darzustellen,
das Datenerfassungswerkzeug (510) zum Identifizieren von Objekttypen und Beziehungstypen der Benutzererfahrungs-Metasprache, wobei die Objekttypen mindestens eine Benutzerrolle umfassen und wobei die Beziehungstypen mindestens eine von der Benutzerrolle ausgeführte Aufgabe umfassen,
das Datenerfassungswerkzeug (510), um die Benutzererfahrungsgestaltung für eine spezifizierte Domäne basierend auf der Benutzererfahrungs-Metasprache zu erfassen, wobei zum Erfassen der Benutzererfahrungsgestaltung das Datenerfassungswerkzeug (510) Benutzereingaben empfangen soll, die Objekte und Objekttypen in einer einzelnen Cascading Style Sheet-, CSS, Vorlage und einer Vielzahl von Bildschirmvorlagen definieren, wobei jede Bildschirmvorlage ein definiertes Bildschirmlayout und Navigationsmuster aufweist, und
das Datenerfassungswerkzeug (510) zum Exportieren einer plattformunabhängigen Darstellung (535) der Benutzererfahrungsgestaltung, wobei die plattformunabhängige Darstellung (535) zumindest basierend auf der erfassten Benutzererfahrungsgestaltung bereitgestellt wird, und wobei die plattformunabhängige Darstellung (535) mindestens eines von einem Diagramm und einer Darstellung der Objekte und der Objekttypen in der erweiterbaren Auszeichnungssprache (extensible Markup Language, XML) ist; und
ein Transformationswerkzeug (540), um die plattformunabhängige Darstellung (535) in eine plattformspezifische Darstellung (545) der Benutzererfahrungsgestaltung zu transformieren, die auf einer Ziel-Laufzeitplattform (550) ausführbar ist.

6. System (100) nach Anspruch 5, wobei das System (100) durch eine Werkzeugkette (130; 500) zum Spezifizieren von Modellen eines architektonischen Typs implementiert wird, der für benutzerorientierte Gestaltung verwendet wird.

7. System (100) nach Anspruch 5, das ferner eine benutzerdefinierte Code-Implementierung einer Service-Composition-Framework-Laufzeitplattform umfasst, um die plattformspezifische Darstellung (545) der Benutzererfahrungsgestaltung auszuführen.

8. System (100) nach Anspruch 5, das ferner fünf bis zehn Bildschirmmasken umfasst.

9. Computerprogrammprodukt, das als ein Programmcode (150) verkörpert ist, der auf einem nicht flüchtigen computerlesbaren Medium (165) gespeichert ist und von einem Prozessor (160) ausgeführt werden kann, wobei der Programmcode (150) Folgendes umfasst:
ein Architekturmethodikmodul (151) und ein Modellierungssprachmodul (152) zum Definieren einer Benutzererfahrungs-Metasprache zum Erzeugen eine Benutzererfahrungsgestaltung basierend auf Subjekten, Verben und Objekten, um Beziehungen zwischen Elementen in der Benutzererfahrungsgestaltung darzustellen;
ein Modellierungswerkzeugmodul (153) zum Identifizieren von Objekttypen und Beziehungstypen der Benutzererfahrungs-Metasprache, wobei die Objekttypen mindestens eine Benutzerrolle umfassen und wobei die Beziehungstypen mindestens eine von der Benutzerrolle ausgeführte Aufgabe umfassen,
das Modellierungswerkzeugmodul (153) zum Erfassen der Benutzererfahrungsgestaltung für eine spezifizierte Domäne basierend auf der Benutzererfahrungsmetasprache, wobei das Erfassen der Benutzererfahrungsgestaltung das Empfangen von Benutzereingaben umfasst, die Objekte und Objekttypen in einer einzelnen Cascading-Style-Sheet-, CSS-, Vorlage und einer Vielzahl von Bildschirmvorlagen definieren, wobei jede Bildschirmvorlage ein definiertes Bildschirmlayout und Navigationsmuster aufweist;
einen Konfigurationsgenerator (154) zum Erzeugen einer plattformunabhängigen Darstellung der Benutzererfahrungsgestaltung, wobei die plattformunabhängige Darstellung auf der Basis zumindest der erfassten Benutzererfahrungsgestaltung erzeugt wird, und wobei die plattformunabhängige Darstellung mindestens eines von einem Diagramm und einer Darstellung der Objekte und der Objekttypen in der erweiterbaren Auszeichnungssprache, XML, ist; und
den Konfigurationsgenerator (154) zum Umwandeln der plattformunabhängigen Darstellung der Benutzererfahrungsgestaltung in eine plattformspezifische Darstellung der Benutzererfahrungsgestaltung, die auf einer Ziel-Laufzeitplattform (155) ausführbar ist.

## Revendications

1. Procédé mis en oeuvre par ordinateur (600 ; 650) servant à spécifier une architecture entraînée par des modèles pour une conception centrée sur l'utilisateur, le procédé (600 ; 650) comportant les étapes consistant à :
définir un métalangage d'expérience d'utilisateur pour créer une conception d'expérience d'utilisateur (610 ; 615) en se basant sur : des sujets, des verbes et des objets pour représenter les relations entre des éléments dans la conception d'expérience d'utilisateur ;
identifier des types d'objets et des types de relations du métalangage d'expérience d'utilisateur (612 ; 613), dans lequel les types d'objets comprennent au moins un rôle de l'utilisateur, et dans lequel les types de relations comprennent au moins une tâche effectuée par le rôle de l'utilisateur ;
capturer la conception d'expérience d'utilisateur pour un domaine spécifié (620 ; 625) en se basant sur le métalangage d'expérience d'utilisateur, dans lequel l'étape consistant à capturer la conception d'expérience d'utilisateur comprend l'étape consistant à recevoir une entrée d'utilisateur définissant des objets et des types d'objets en un seul patron CSS (single cascading sheet - feuille de style en cascade) et une pluralité de patrons d'écran, chaque patron d'écran étant doté d'une disposition d'écran définie et de modèles de navigation ;
exporter une représentation indépendante de la plateforme de la conception d'expérience d'utilisateur (630 ; 635), dans lequel la représentation indépendante de la plateforme est fournie en se basant sur au moins la conception d'expérience d'utilisateur capturée, et dans lequel la représentation indépendante de la plateforme est au moins l'un parmi un diagramme et une représentation XML (extensible markup language - langage de balisage extensible) des objets et des types d'objets ; et
transformer la représentation indépendante de la plateforme en une représentation spécifique à la plateforme de la conception d'expérience d'utilisateur qui est en mesure d'être exécutée sur une plateforme d'exécution ciblée (640 ; 645).

2. Procédé (600 ; 650) selon la revendication 1, dans lequel l'étape consistant à transformer est mise en oeuvre par l'application d'une chaîne d'outils.

3. Procédé (600 ; 650) selon la revendication 1, comportant par ailleurs l'étape consistant à utiliser un outil de capture qui code le métalangage pour la conception centrée sur l'utilisateur (611).

4. Procédé (600 ; 650) selon la revendication 1, comportant par ailleurs l'étape consistant à exécuter la représentation spécifique à la plateforme de la conception d'expérience d'utilisateur sur une plateforme d'exécution (650).

5. Système (100) ayant des instructions en mesure d'être lues par ordinateur stockées sur un support non transitoire lisible par ordinateur (165) et en mesure d'être exécutées par un processeur (160) pour spécifier une architecture entraînée par des modèles pour une conception centrée sur l'utilisateur, comportant :
un outil de capture de données (510) servant à définir un métalangage d'expérience d'utilisateur pour créer une conception d'expérience d'utilisateur en se basant sur des sujets, des verbes et des objets pour représenter les relations entre des éléments dans la conception d'expérience d'utilisateur,
l'outil de capture de données (510) servant à identifier des types d'objets et des types de relations du métalangage d'expérience d'utilisateur, dans lequel les types d'objets comprennent au moins un rôle de l'utilisateur, et dans lequel les types de relations comprennent au moins une tâche effectuée par le rôle de l'utilisateur,
l'outil de capture de données (510) servant à capturer la conception d'expérience d'utilisateur pour un domaine spécifié en se basant sur le métalangage d'expérience d'utilisateur, dans lequel pour capturer la conception d'expérience d'utilisateur, l'outil de capture de données (510) doit recevoir une entrée d'utilisateur définissant des objets et des types d'objets en un seul patron CSS (single cascading sheet - feuille de style en cascade) et une pluralité de patrons d'écran, chaque patron d'écran étant doté d'une disposition d'écran définie et de modèles de navigation, et
l'outil de capture de données (510) servant à exporter une représentation indépendante de la plateforme (535) de la conception d'expérience d'utilisateur, dans lequel la représentation indépendante de la plateforme (535) est fournie en se basant sur au moins la conception d'expérience d'utilisateur capturée, et dans lequel la représentation indépendante de la plateforme (535) est au moins l'un parmi un diagramme et une représentation XML (extensible markup language - langage de balisage extensible) des objets et des types d'objets ; et
un outil de transformation (540) servant à transformer la représentation indépendante de la plateforme (535) en une représentation spécifique à la plateforme (545) de la conception d'expérience d'utilisateur qui est en mesure d'être exécutée sur une plateforme d'exécution ciblée (550).

6. Système (100) selon la revendication 5, dans lequel le système (100) est mis en oeuvre par une chaîne d'outils (130 ; 500) pour spécifier des modèles d'un type architectural appliqué à la conception centrée sur l'utilisateur.

7. Système (100) selon la revendication 5, comportant par ailleurs une mise en oeuvre de code personnalisé d'une plateforme d'exécution de cadre de composition de services pour exécuter la représentation spécifique à la plateforme (545) de la conception d'expérience d'utilisateur.

8. Système (100) selon la revendication 5, comportant par ailleurs de cinq à dix patrons d'écran.

9. Produit programme informatique se présentant sous la forme d'un code de programme (150) stocké sur un support non transitoire lisible par ordinateur (165) et en mesure d'être exécuté par un processeur (160), le code de programme (150) comportant :
un module de méthodologie d'architecture (151) et un module de langage de modélisation (152) servant à définir un métalangage d'expérience d'utilisateur pour créer une conception d'expérience d'utilisateur en se basant sur des sujets, des verbes et des objets pour représenter les relations entre des éléments dans la conception d'expérience d'utilisateur ;
un module d'outils de modélisation (153) servant à identifier des types d'objets et des types de relations du métalangage d'expérience d'utilisateur, dans lequel les types d'objets comprennent au moins un rôle de l'utilisateur, et dans lequel les types de relations comprennent au moins une tâche effectuée par le rôle de l'utilisateur ;
le module d'outils de modélisation (153) servant à capturer la conception d'expérience d'utilisateur pour un domaine spécifié en se basant sur le métalangage d'expérience d'utilisateur, dans lequel l'étape consistant à capturer la conception d'expérience d'utilisateur comprend l'étape consistant à recevoir une entrée d'utilisateur définissant des objets et des types d'objets en un seul patron CSS (single cascading sheet - feuille de style en cascade) et une pluralité de patrons d'écran, chaque patron d'écran étant doté d'une disposition d'écran définie et de modèles de navigation ;
un générateur de configuration (154) servant à générer une représentation indépendante de la plateforme de la conception d'expérience d'utilisateur, dans lequel la représentation indépendante de la plateforme est générée en se basant sur au moins la conception d'expérience d'utilisateur capturée, et dans lequel la représentation indépendante de la plateforme est au moins l'un parmi un diagramme et une représentation XML (extensible markup language - langage de balisage extensible) des objets et des types d'objets ; et
le générateur de configuration (154) servant à transformer la représentation indépendante de la plateforme de la conception d'expérience d'utilisateur en une représentation spécifique à la plateforme de la conception d'expérience d'utilisateur qui est en mesure d'être exécutée sur une plateforme d'exécution ciblée (155).
